# EUROPEAN PATENT SPECIFICATION

(11) **EP 4 127 538 B1**
(45) Date of publication and mention of the grant of the patent: **06.08.2025**
(21) Application number: 20754356.2
(22) Date of filing: 30.06.2020
(51) Int. Cl.: F16L 21/06, F16L 21/03

(54) **RESTRAINING PIPE COUPLING**
HALTEROHRKUPPLUNG
COUPLAGE DE RETENUE DE TUYAU

(30) Priority: 30.03.2020 PT 2020116213
(43) Date of publication of application: 08.02.2023
(73) Proprietor: Fucoli-Somepal - Fundição de Ferro S. A, 3004-005 Coimbra (PT)
(72) Inventor: CRAVINHO SANTOS, Bruno Ricardo, 3004-005 Coimbra (PT); TEIXEIRA SILVA, Jorge Manuel, 4100-479 Porto (PT); ROCHA SOUSA, Paulo Roberto, 4560-765 Santa Marta (PT); CAETANO BAPTISTA, António José, 4465-103 São Mamede De Infesta (PT)
(74) Representative: Patentree
(86) International application number: PCT/IB2020/056189
(87) International publication number: WO 2021/198749

(56) References cited:
- EP-A2- 2 090 815
- US-A1- 2016 215 907
- US-A1- 2020 025 316

## Description

### TECHNICAL FIELD

The present device belongs to the field of pipe coupling devices, in particular establishing restrained pipe connections using pipe coupling devices.

### BACKGROUND

The present disclosure is in the field of restraining connections for locking pipe couplings.

There are documents disclosing devices with the purpose of blocking longitudinally cylindrical multi-material pipes, but these do not have independent restraining and sealing.

Furthermore, existing devices are not suitable to establish longitudinal connections between PVC or PE pipes of major diameters under high internal pressure. For example, in document US2019203870 the structure of the valve has bolts, which compress the sealing member for both restraining and sealing. In document PH12018501661 the device is capable of independently sealing and restraining the pipes to be coupled, however it is suitable neither for large diameters under high internal pressures nor for when axial misalignments between the pipes coupled are present.

US 2020/0025316 discloses a pipe coupling including a pipe housing formed with an annular groove spaced axially from a first end of the pipe housing, a grooved coupling including a ring member that includes a coupling key received in the annular groove, and a grip ring assembly positioned at a second end of the pipe housing opposite to the first end. The grip ring assembly includes two clamp members arranged to be fastened and tightened towards each other by a fastener.

These facts are disclosed in order to illustrate the technical problem addressed by the present disclosure.

### General Description

The invention is defined by the restraining pipe coupling for a pipe to be restrained, as defined in claim 1.

The present subject-matter discloses a pipe coupling device that may be used for establishing longitudinally restrained connections of pipes of different diameters and/or multiple materials specially those of very large diameters under high internal pressure loads, all while allowing for a small axial misalignment between the pipes to be coupled.

The disclosure comprises a pipe coupling device suitable for connecting pipes. This structure can be a gate valve, a "T" socket, a socket bend, a fixation flange among others. The pipe coupling is preferably made of cast iron. The pipe coupling contains two axial ends, one of them is turned to the structure to be coupled to the pipe and the other end is turned to the pipe to be coupled.

The present document describes a device for:
coupling pipes carrying fluids or sewage without leaking the material confined within the pipes' walls, and the coupling, or allow slipping of the pipes relative to the coupling;
coupling multi-material pipes of a certain diameter within a certain diameter range, not necessarily of the same diameter, at both ends.

The device, according to an embodiment, comprises:
a main sleeve;
annular restraining elements;
sealing members;
coupling sectors to be radially displaced, towards the pipe;
spring-like element, responsible for compressing the gripping elements against both the pipe and the circular sectors;
means of mechanically achieving said movement by reducing longitudinal spacing between said sectors while maintaining misalignments between said sectors possible, namely, but not exclusive to, bolts and nuts.

The pipe coupling comprises a number of coupling sectors that are suitable to be tightened circumferentially between them with bolts and nuts using co-planar flaps to join the different sectors. These sectors that, according to an embodiment, are equal parts of a circle and, when the gaps between them are eliminated, make a full circle that allows a better tightening around the pipe.

Each coupling sector, according to an embodiment, contains in both its ends flaps with holes to allow the tightening between the sectors. These flaps contain a bolt housing to fix the head of the bolt and facilitate the tightening. These referred block bolts can be a metal plate that is placed between the head of the bolt and the flap of the sector. In an embodiment, said plate can be of cylinder shape to allow for misalignments between sectors.

Each sector's internal face, in contact with the sealing member, is comprised, according to an embodiment, of three non-concentric curvatures enabling for a better adaptation of the device to different pipe diameters to be coupled. Hence, restraining and sealing pressures are more evenly distributed along the surface of the pipe, independently of the pipe diameter.

The present disclosure includes a coupling device for connecting to a pipe wherein restraining and sealing are independently assured, the installation being simpler and easier.

It is disclosed a restraining pipe coupling for connecting to a pipe, comprising:
a coupling sleeve for receiving an end of the pipe to be restrained and having a first annular abutment surface;
a restraining member with a wedge-shaped top-front face and two circular recesses on the bottom;
a semi-annular restraining member, formed by a series of restraining members, for surrounding the pipe and having a second annular abutment surface, assembled in a recess within the coupling sector;
a grip element for gripping the pipe, assembled within a recess of the annular restraining member for facing the pipe;
a seal ring for sealing between the coupling sleeve and the pipe, comprised in a recess of the coupling sector;
wherein the restraining member is comprised of a number of circumferential sectors, which house a set of semi-annular restraining members formed by a succession of restraining members, for tightening together against and around the pipe;
wherein the coupling sleeve presents a tab along which the coupling sector is free to move.

The disclosed pipe coupling allows for shorter coupling arms, requiring shorter lengths, resulting in more compact pipe connections and pipe devices. The disclosed pipe coupling allows for an easier access to the fasteners for quicker and less encumbered work in location.

The disclosed pipe coupling also allows a degree of movement between restraining member and coupling sleeve such that small axial misalignments on the pipe can be tolerated while maintaining adequate grip and sealing. The restraining member is able to adjust by sliding along an annular abutment face on the coupling sector's surface. On the opposite side of the restraining member, it is facing a flexible spring-like element, absorbing such misalignment on the restraining member.

By having independent sealing and gripping elements, placed separately inside the coupling sector, sealing will not be affected by this potential adjustment of the restraining member.

In an embodiment, the circumferential sectors are arranged to receive nuts and bolts for fastening the circumferential sectors around the pipe wherein said bolts are aligned circumferentially.

The disclosed pipe coupling allows for the fasteners to be supplied independently of the coupling, such that eroded fasteners can be fully and easily replaced, not requiring machining or rethreading of the pipe coupling.

In an embodiment, the coupling sectors comprise perforated flaps arranged for receiving said nuts and bolts.

In an embodiment, the circumferential sectors comprise a surface arranged for compressing the sealing member against the pipe, comprised by three non-concentric radial surfaces.

The disclosure allows the same principle being applied on the recess that houses the semi-annular restraining member.

In an embodiment, each coupling sector comprises two flaps, each flap at an end of the respective circumferential sector, each of the flaps being coplanar with the contiguous flap of the neighbouring circumferential sector, for receiving said nuts and bolts.

In an embodiment, said one or more flaps comprise one or more bolt blockings for preventing a bolt or nut from rotating in order to facilitate the tightening of said nuts and bolts.

In an embodiment, the bolt blocking is a protruding rib in said one or more flaps.

According to the invention, each circumferential sector comprises a resilient element behind the semi-annular restraining member, arranged for allowing some tolerances on the restraining members so that small axial misalignments can be absorbed.

In an embodiment, the annular abutment surface on the coupling sector is comprised of a recess. On the coupling sleeve, said abutment surface is comprised of a tab which goes inside the recess on the coupling sector.

In an embodiment, the first annular abutment surface is comprised of a circumferential protruding rim on the coupling sleeve and the second annular abutment surfaces is comprised of a circumferential lip, on the coupling sector, having a circumferential recess for receiving said rim.

An embodiment comprises said nuts and bolts for fastening circumferentially around the pipe the coupling sectors.

In an embodiment, the coupling sleeve is of cast iron, in particular ductile cast iron.

In an embodiment, the coupling sector is of cast iron, in particular ductile cast iron.

In an embodiment, the restraining member is comprised of a main body in polymeric material, particularly POM, and a gripping element, placed within a recess on the restraining member.

In an embodiment, the gripping element is grooved, segmented, composed of multiple wedges or ridged for enhancing grip, preferably made of stainless steel.

In an embodiment, the seal ring is elastomeric, in particular polymeric, further in particular synthetic rubber, further in particular ethylene propylene diene monomer rubber, EPDM.

In an embodiment, the nuts and bolts are of stainless steel.

An embodiment comprises a removable stop tab inserted between two contiguous circumferential sectors of the restraining member for preventing said two contiguous circumferential sectors from clashing during transportation or mounting.

In an embodiment, the tab stop extends into a segment opening of the grip ring, such that grip ring is kept untightened in order to facilitate insertion of the pipe during mounting.

In an embodiment, said stop tab can be modular and partially removed. Given the diameters to be coupled, the operator knows beforehand the gap between the tabs on the coupling sectors. Hence, the tab stops left on the coupling device can be used to limit the torque applied on the bolts.

Furthermore, said stop tab can be made from a hard polymeric material, which enhances sealing behaviour on the pipe, in the interstitial spaces between tabs (existing on the coupling sectors).

An embodiment comprises a removable elastomeric element between first and second annular abutment surfaces for preventing the first and second annular abutment surfaces from clashing during transportation or mounting

An embodiment comprises a partially removable elastomeric element between the restraining set tab surfaces for compressing the sealing member and enhancing sealing between the restraining sets or the coupling sectors.

In an embodiment the semi-annular restraining member set and the recess of the coupling sector for receiving the semi-annular restraining member set have a conical shape arranged to strengthen the gripping of the grip member through an axial pipe traction effort result.

In an embodiment, the sleeve comprises a rail arranged to guide the linear movement of the coupling sector.

The pipe coupling sleeve comprises a tab which goes inside a first recess existing on the coupling sector. Said tab has an extruding face for guiding the coupling sector's radial (linear) movement. Said coupling sector has a second recess which comprises an annular abutment surface against which the restraining members are compressed when they are gripping on the pipe. Said restraining members comprise circular recesses on which are assembled the gripping elements. Furthermore, on the inside of the tabs, on the coupling sectors, there are slots along which said pins can move. Said pins are assembled on those restraining members positioned on the far ends (left or right, facing the front of the coupling sector) of the semi-annular restraining member, which is assembled inside the coupling sector. Behind the semi-annular restraining member exists a spring-like annular element for compressing the semi-annular restraining member against the annular abutment surface on the coupling sector and, because this follows a wedge principle, compresses the semi-annular restraining member against the pipe, locking it axially. Keeping the central restraining members that form the semi-annular restraining member set in place, a spring is inserted through a hole that exists in all of the restraining members.

The coupling sleeve contains a seal groove or recess to place a lip seal ring, this lip seal ring prevents leakage.

The disclosure belongs to the field of restraining connections for pipe couplings and may be applied in structures for laying and blocking pipes with a circular cross section. The pipe coupling of the present disclosure may be used to establish longitudinally force-locked connections with PVC or PE pipes.

### BRIEF DESCRIPTION OF THE DRAWINGS

The following figures provide preferred embodiments for illustrating the description and should not be seen as limiting the scope of invention.
**Figure 1** illustrates an embodiment according to the present disclosure of a pipe coupling.
**Figure 2** illustrates in more detail an embodiment according to the present disclosure of a pipe coupling.
**Figure 3** illustrates a detail of the coupling sector with the annular restraining member and spring-like element according to the present disclosure of a pipe coupling adapted to a gate valve.
**Figure 4** illustrates the same elements as figure 3, but presents only half of the coupling sector.

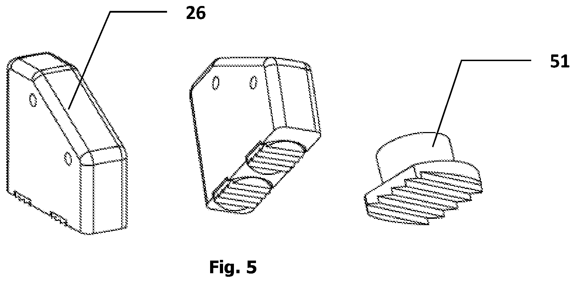

**Figure 5** illustrates a detail of the restraining member with the gripping member assembled.

### DETAILED DESCRIPTION

The present disclosure belongs to the field of restraining connections for pipe couplings. The present subject-matter discloses a pipe coupling to be applied in structures for laying and blocking pipes with a circular cross section. In particular, the pipe coupling of the present disclosure may be used to establish longitudinally force-locked connections with PVC or PE pipes.

The restraining pipe coupling for a pipe to be restrained, comprises a coupling sleeve for receiving an end of the pipe and comprising a coupling sleeve tab which protrudes radially and has an annular abutment surface; a sealing ring for sealing between the annular abutment surface of the coupling sleeve and the pipe; a plurality of coupling sectors which are shaped as circumferential annular sectors and radially displaceable towards the pipe by circumferentially tightening between consecutive coupling sectors.

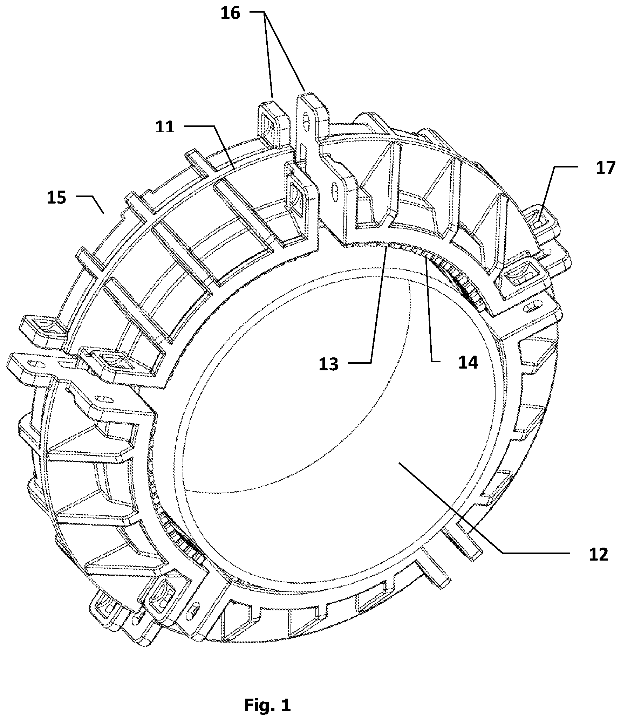

**Figure 1** illustrates an embodiment according to the present disclosure of a pipe coupling that comprises: pipe coupling device **15;** pipe to be coupled **12;** coupling sectors **11;** restraining member **13** forming the semi-annular restraining member **14.**

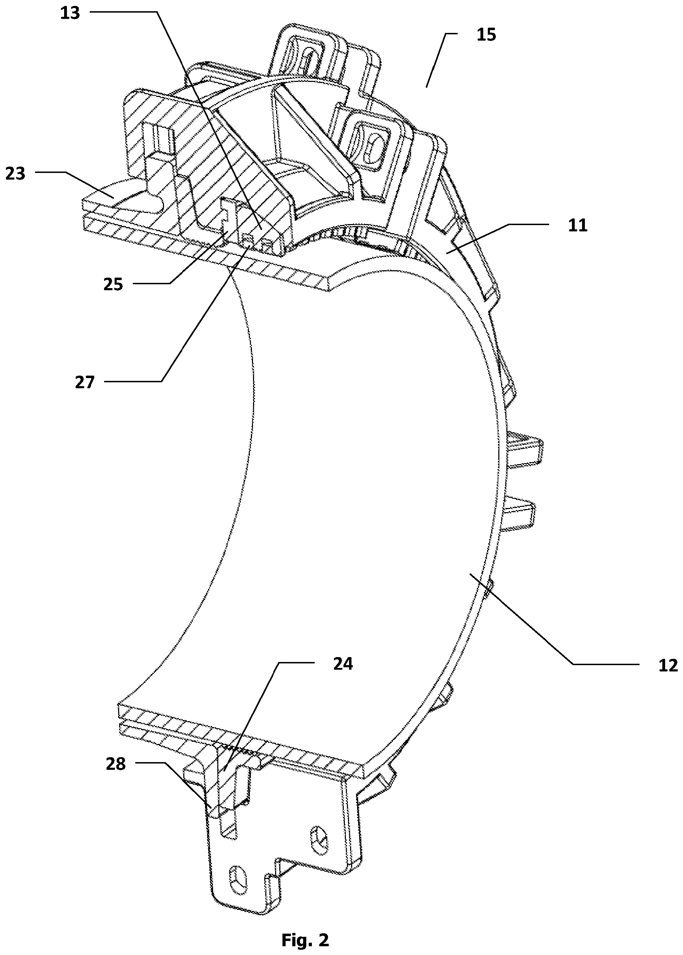

**Figure 2** illustrates in more detail an embodiment according to the present disclosure of a pipe coupling that comprises: pipe coupling device **15;** pipe to be coupled **12;** sealing member **24;** coupling sleeve **23;** coupling sectors **11;** restraining member **13;** gripping member **27;** spring-like element **25;**

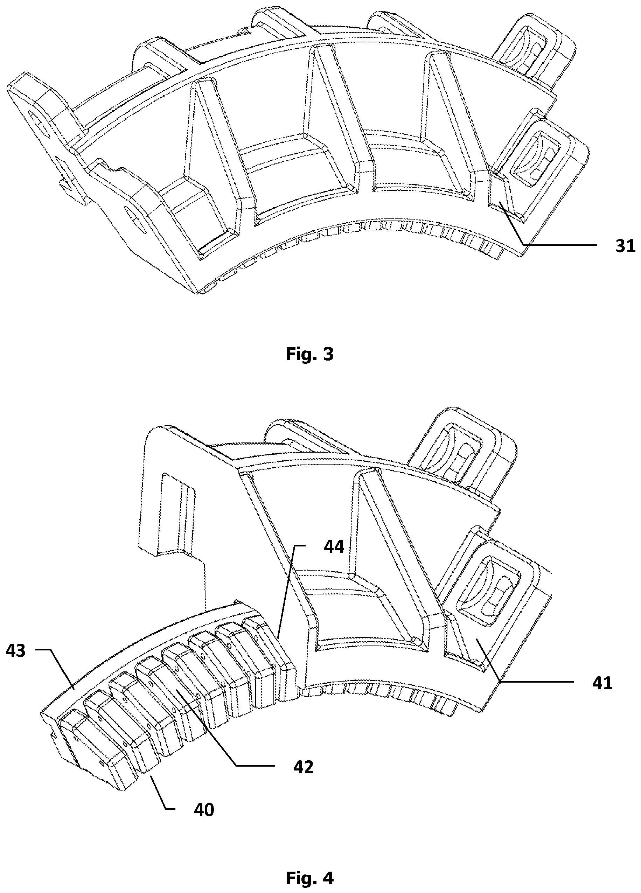

Figure **3** illustrates a detail of the coupling sector **31** with the annular restraining member and spring-like element.

The present disclosure also relates to a pipe coupling **15** comprising a number of separable sectors **11** wherein each sector has two flaps **16.** The flaps **16** of different sectors **11** are co-planar between them and their tightness is ensured by bolts and nuts. These flaps contain in the external face a cylindrical recess **17** to insert a cylindrical washer in order to absorb misalignments between coupling sectors **11.**

In an embodiment, the coupling sleeve **23** comprises a tab **28** for housing/abutting the sealing member **24** in order to prevent leakage.

**Figure 4** illustrates in more detail an embodiment according to the present disclosure of a pipe-coupling device. In this figure, one can see a cutaway view of the coupling sector **41;** the semi-annular restraining member **40** formed by the succession of several restraining members **42** and the spring-like, resilient, element **43** all housed in a recess **44** present on the coupling sector.

In an embodiment, a stop tab is included between two contiguous coupling sectors **11** of the restraining member such that these do not clash during transportation or mounting. The stop tab can be modular and partially removed so that length of the stop tab remaining corresponds to the interstitial space between coupling sectors. Said stop tab limits the approximation between coupling sectors **11** and also helps compressing the sealing member on the interstitial space between coupling sectors **11,** enhancing sealing behaviour on a defective area

The disclosure should not be seen in any way restricted to the embodiments described and a person with ordinary skill in the art will foresee many possibilities to modifications thereof. The above described embodiments are combinable. The following claims further set out particular embodiments of the disclosure.

## Claims

1. A restraining pipe coupling for a pipe to be restrained, comprising:
a coupling sleeve (23) for receiving an end of the pipe and comprising a coupling sleeve tab (28) which protrudes radially and has an annular abutment surface;
a sealing ring (24) for sealing between the annular abutment surface of the coupling sleeve (23) and the pipe (12);
a plurality of coupling sectors (11, 31) which are shaped as circumferential annular sectors and radially displaceable towards the pipe by circumferentially tightening between consecutive coupling sectors;
a plurality of restraining members (13, 14, 40, 42), each restraining member being formed by a plurality of restraining member elements (13, 14, 40, 42) comprising a gripping surface for restraining the pipe from being pulled from the coupling;
wherein each of the coupling sectors (11, 31) comprises a first recess (44) arranged towards the pipe for slidably receiving the coupling sleeve tab (28) and the sealing ring (24);
each of the coupling sectors (11, 31) comprises a second recess arranged towards the pipe for receiving one or more restraining members;
each restraining member element (13, 14, 40, 42) is wedge-shaped by comprising a surface which is inclined towards a longitudinal central axis of the pipe, such that the inclined surfaces of the coupling restraining member elements form a combined frustoconical restraining surface which tapers radially inwards away from the coupling sleeve; and
the second recess comprises an inclined recess surface, such that the inclined recess surfaces of the coupling sectors (13, 14, 40, 42) form a combined frustoconical abutment surface for facing against the combined frustoconical restraining surface;
wherein when the coupling sectors (13, 14, 40, 42) are radially displaced towards the pipe by circumferentially tightening between consecutive coupling sectors, the sealing ring (24) is compressed against the pipe and the annular abutment surface of the coupling sleeve; and when the pipe is pulled from the coupling, the restraining member elements, by the mutual sliding of the frustoconical surfaces,
are tightened together and against the pipe,
**characterised in that**
each circumferential sector comprises a spring-like element (25) behind a semi-annular restraining member, arranged for allowing some tolerances on the restraining members so that small axial misalignments can be absorbed.

2. Restraining pipe coupling according to the previous claim wherein the restraining member element (13, 14, 40, 42) comprise one or more recesses facing the pipe, each recess comprising a grip element (27) for gripping the pipe, wherein the grip element or elements (27) comprise the gripping surface of the restraining member element.

3. Restraining pipe coupling according to any of the previous claims, wherein the coupling sleeve (23) comprises a rail arranged to guide circumferential movement of the coupling sector (13, 14, 40, 42) relative to the coupling sleeve.

4. Restraining pipe coupling according to according to any of the previous claims, wherein the coupling sectors (13, 14, 40, 42) are arranged to receive nuts and bolts for circumferentially fastening between consecutive coupling sectors, wherein said bolts are aligned circumferentially and/or wherein each coupling sector comprises a surface for compressing the sealing ring (24) against the pipe, each said surface being comprised by three non-concentric radial surfaces.

5. Restraining pipe coupling for connecting to a pipe according to any of the previous claims, wherein the inclined recess surface of each coupling sector (13, 14, 40, 42) comprises a surface for compressing the restraining members or members against the pipe, each said surface being comprised by three non-concentric radial surfaces.

6. Restraining pipe coupling according to according to any of the previous claims, wherein the coupling sectors comprise perforated flaps (16) arranged for receiving nuts and bolts, preferably wherein each coupling sector comprises two flaps (16), each flap at an end of the respective circumferential sector, each of the flaps (16) being coplanar with the contiguous flap of the neighbouring circumferential sector, for receiving nuts and bolts for circumferentially fastening between consecutive coupling sectors.

7. Restraining pipe coupling according to any of the previous claims, wherein the annular abutment surface is comprised of a circumferential protruding rim on the coupling sleeve and a second annular abutment surfaces is comprised of a circumferential lip, on the coupling sector, having a circumferential recess for receiving said rim.

8. Restraining pipe coupling according to any of the previous claims, wherein the coupling sleeve (23) is of cast iron, in particular ductile cast iron.

9. Restraining pipe coupling according to any of the previous claims, wherein the coupling sector (11, 31) is of cast iron, in particular ductile cast iron.

10. Restraining pipe coupling according to any of the previous claims, wherein the restraining member (13, 14, 40, 42) is comprised of a main body in polymeric material, particularly POM, and a gripping element (27), placed within a recess on the restraining member.

11. Restraining pipe coupling according to any of the previous claims, wherein the gripping element (27) is grooved, segmented, composed of multiple wedges or ridged for enhancing grip and/or wherein the gripping element (27) is of stainless steel.

12. Restraining pipe coupling according to any of the previous claims, comprising a modular and partially removable, stop tab inserted between two contiguous circumferential sectors of the restraining member for preventing said two contiguous circumferential sectors from clashing during transportation or mounting.

13. Restraining pipe coupling according to any of the previous claims, comprising a removable elastomeric element between said first and second annular abutment surfaces for preventing said first and second annular abutment surfaces from clashing during transportation or mounting.

14. Restraining pipe coupling for connecting to a pipe according to any of the previous claims, comprising a partially removable elastomeric element between said restraining set tab surfaces for compressing the sealing member (24) and enhancing sealing between the restraining sets or the coupling sectors (13, 14, 40, 42).

15. Restraining pipe coupling for connecting to a pipe according to any of the previous claims, wherein the restraining member and the recess of the coupling sector for receiving the restraining member have a conical shape arranged for strengthening the gripping of the grip member in response to an axial pipe traction effort.

## Patentansprüche

1. Eine Halterohrkupplung für ein zu haltendes Rohr, umfassend:
eine Kupplungsmuffe (23) zur Aufnahme eines Endes des Rohres, umfassend eine Kupplungsmuffe mit Lasche (28), die radial hervorsteht und eine ringförmige Anlagefläche aufweist;
ein Dichtungsring (24) zur Abdichtung zwischen der ringförmigen Anlagefläche der Kupplungsmuffe (23) und dem Rohr (12);
eine Vielzahl von Kupplungselementen (11, 31), die als umlaufende Ringelemente geformt sind und durch ein in Umfangsrichtung wirkendes Anziehen zwischen aufeinanderfolgenden Kupplungselementen radial zum Rohr hin verschoben werden können;
eine Vielzahl von Rückhalteelementen (13, 14, 40, 42), wobei jedes Rückhalteelement aus mehreren Segmenten eines Halteelements (13, 14, 40, 42) besteht, die eine Klemmfläche aufweisen, um das Herausziehen des Rohrs aus der Kupplung zu verhindern;
wobei jedes der Kupplungselemente (11, 31) eine zum Rohr hin angeordnete erste Aussparung (44) aufweist, um die Lasche der Kupplungsmuffe (28) und den Dichtungsring (24) gleitend aufzunehmen;
jedes der Kupplungselemente (11, 31) eine zum Rohr hin angeordnete zweite Aussparung zur Aufnahme eines oder mehrerer Rückhalteelemente aufweist;
jedes Segment eines Halteelements (13, 14, 40, 42) keilförmig ausgebildet ist und eine Oberfläche aufweist, die zur zentralen Längsachse des Rohrs hin geneigt ist, sodass die geneigten Oberflächen der Segmente der Halteelemente gemeinsam eine kegelstumpfförmige Klemmfläche bilden, die sich radial nach innen und von der Kupplungsmuffe weg verjüngt; und
die zweite Aussparung eine geneigte Fläche aufweist, sodass die geneigten Flächen der Aussparungen der Kupplungselemente (13, 14, 40, 42) gemeinsam eine kegelstumpfförmige Anlagefläche bilden, die der kegelstumpfförmigen Klemmfläche gegenüberliegt;
wobei die Kupplungselemente (13, 14, 40, 42) radial zu dem Rohr hin verschoben werden, indem sie zwischen aufeinanderfolgenden Kupplungselementen in Umfangsrichtung festgezogen werden, wodurch der Dichtungsring (24) gegen das Rohr sowie gegen die ringförmige Anlagefläche der Kupplungsmuffe gedrückt wird; und wobei die Halteelemente beim Herausziehen des Rohrs aus der Kupplung durch das gegenseitige Gleiten der kegelstumpfförmigen Oberflächen zusammengedrückt und dadurch fest gegen das Rohr gepresst werden;
**dadurch gekennzeichnet, dass**
jedes umlaufende Segment ein federähnliches Element (25) hinter einem halbringförmigen Halteelement aufweist, das so angeordnet ist, dass es eine gewisse Toleranz der Rückhalteelemente ermöglicht und dadurch kleinere axiale Fehlausrichtungen kompensiert werden können.

2. Halterohrkupplung nach dem vorangehenden Anspruch, wobei das Rückhalteelement (13, 14, 40, 42) eine oder mehrere dem Rohr zugewandte Aussparungen umfasst, wobei jede Aussparung ein Klemmelement (27) zum Greifen des Rohres aufweist, wobei das Klemmelement oder die Klemmelemente (27) die Klemmfläche des Rückhalteelements aufweisen.

3. Halterohrkupplung nach einem der vorangehenden Ansprüche, wobei die Kupplungsmuffe (23) eine Schiene umfasst, die so angeordnet ist, dass sie eine Bewegung des Kupplungselements (13, 14, 40, 42) in Umfangsrichtung relativ zur Kupplungsmuffe führt.

4. Halterohrkupplung nach einem der vorangehenden Ansprüche, wobei die Kupplungselemente (13, 14, 40, 42) so ausgebildet und angeordnet sind, dass sie Muttern und Schrauben zur Befestigung in Umfangsrichtung zwischen aufeinanderfolgenden Kupplungselementen aufnehmen können, wobei die Schrauben in Umfangsrichtung ausgerichtet sind, und/oder wobei jedes Kupplungselement eine Fläche aufweist, die zum Zusammendrücken des Dichtungsrings (24) gegen das Rohr dient, wobei diese Fläche aus drei radial verlaufenden, nicht konzentrischen Teilflächen besteht.

5. Halterohrkupplung zur Verbindung mit einem Rohr nach einem der vorangehenden Ansprüche, wobei die geneigte Fläche der Aussparung jedes Kupplungselements (13, 14, 40, 42) eine Fläche zum Zusammendrücken der Rückhalteelemente gegen das Rohr bildet, wobei jede der genannten Flächen aus drei radial verlaufenden, nicht konzentrischen Teilflächen besteht.

6. Halterohrkupplung nach einem der vorangehenden Ansprüche, wobei die Kupplungselemente gelochte Laschen (16) aufweisen, die zur Aufnahme von Muttern und Schrauben vorgesehen sind, wobei jedes Kupplungselement bevorzugt zwei Laschen (16) aufweist, von denen sich jeweils eine an einem Ende des betreffenden Umfangssektors befindet, und wobei jede dieser Laschen (16) in einer Ebene mit der benachbarten Lasche des angrenzenden Umfangssektors liegt, um Muttern und Schrauben zur Befestigung in Umfangsrichtung zwischen aufeinanderfolgenden Kupplungselementen aufzunehmen.

7. Halterohrkupplung nach einem der vorangehenden Ansprüche, wobei die ringförmige Anlagefläche durch einen umlaufenden, vorstehenden Rand an der Kupplungsmuffe gebildet wird, und eine zweite ringförmige Anlagefläche durch eine umlaufende Lippe am Kupplungselement, die eine umlaufende Aussparung zur Aufnahme des genannten Randes aufweist.

8. Halterohrkupplung nach einem der vorangehenden Ansprüche, wobei die Kupplungsmuffe (23) aus Gusseisen, insbesondere aus duktilem Gusseisen besteht.

9. Halterohrkupplung nach einem der vorangehenden Ansprüche, wobei das Kupplungselement (11, 31) aus Gusseisen, insbesondere aus duktilem Gusseisen, besteht.

10. Halterohrkupplung nach einem der vorangehenden Ansprüche, wobei das Rückhalteelement (13, 14, 40, 42) aus einem Hauptkörper aus einem Polymermaterial, insbesondere POM, und einem Klemmelement (27) besteht, dass in einer Aussparung des Rückhalteelements angeordnet ist.

11. Halterohrkupplung nach einem der vorangehenden Ansprüche, wobei das Klemmelement (27) gerillt, segmentiert, aus mehreren Keilen zusammengesetzt oder geriffelt ist, um die Haftung am Rohr zu erhöhen, und/oder wobei das Klemmelement (27) aus rostfreiem Stahl besteht.

12. Halterohrkupplung nach einem der vorangehenden Ansprüche, umfassend einen modularen und teilweise entfernbaren Anschlag, der zwischen zwei aneinandergrenzenden Umfangssegmenten des Rückhalteelements angeordnet ist, um zu verhindern, dass die genannten beiden aneinandergrenzenden Umfangssegmente während des Transports oder der Montage aneinanderstoßen.

13. Halterohrkupplung nach einem der vorangehenden Ansprüche, umfassend ein entfernbares Element aus Elastomer, das zwischen der ersten und der zweiten ringförmigen Anlagefläche angeordnet ist, um zu verhindern, dass die genannte erste und zweite ringförmige Anlagefläche während des Transports oder der Montage aneinanderstoßen.

14. Halterohrkupplung zur Verbindung mit einem Rohr nach einem der vorangehenden Ansprüche, mit einem teilweise entfernbaren Element aus Elastomer, das zwischen dem genannten Satz an Anschlägen angeordnet ist, um das Dichtungselement (24) zusammenzudrücken und die Abdichtung zwischen den Sicherungselementen bzw. den Kupplungselementen (13, 14, 40, 42) zu verbessern.

15. Halterohrkupplung zur Verbindung mit einem Rohr nach einem der vorangehenden Ansprüche, wobei das Rückhalteelement und die Aussparung des Kupplungselements eine konische Form aufweisen, die so ausgestaltet ist, dass sie das Eingreifen des Klemmelements bei axialer Zugkraft auf das Rohr verstärkt.

## Revendications

1. Un couplage de retenue de tuyau pour qu'un tuyau soit retenu, comprenant :
un manchon de couplage (23) destiné à recevoir une extrémité du tuyau et comprenant une languette de manchon de couplage (28) qui fait saillie radialement et a une surface de butée annulaire ;
une bague d'étanchéité (24) destinée à sceller entre la surface de butée annulaire du manchon de couplage (23) et le tuyau (12) ;
une pluralité de secteurs de couplage (11, 31) qui ont la forme de secteurs annulaires circonférentiels et peuvent être déplacés de manière radiale vers le tuyau en serrant de manière circonférentielle entre les secteurs de couplage consécutifs ;
une pluralité de membres de retenue (13, 14, 40, 42), chaque membre de retenue étant formé par une pluralité d'éléments de membre de retenue (13, 14, 40, 42) comprenant une surface de prise destinée à retenir le tuyau pour ne pas qu'il soit retiré du couplage ;
dans lequel chacun des secteurs de couplage (11, 31) comprend un premier renfoncement (44) arrangé vers le tuyau destiné à recevoir de manière coulissante la languette de manchon de couplage (28) et la bague d'étanchéité (24) ;
chacun des secteurs de couplage (11, 31) comprend un second renfoncement arrangé vers le tuyau destiné à recevoir un ou plusieurs membres de retenue ;
chaque élément de membre de retenue (13, 14, 40, 42) est en forme de coin en comprenant une surface qui est inclinée vers un axe central longitudinal du tuyau, tel que les surfaces inclinées des éléments de membre de retenue de couplage forment une surface de retenue tronconique combinée qui s'effile radialement vers l'intérieur dans la direction opposée à celle du manchon de couplage ; et
le second renfoncement comprend une surface de renfoncement inclinée, telle que les surfaces de renfoncement inclinées des secteurs de couplage (13, 14, 40, 42) forment une surface de butée tronconique combinée destinée à être placée contre la surface de retenue tronconique ;
dans lequel lorsque les secteurs de couplage (13, 14, 40, 42) sont radialement déplacés vers le tuyau en serrant de manière circonférentielle entre les secteurs de couplage consécutifs, la bague d'étanchéité (24) soit comprimée contre le tuyau et la surface de butée annulaire du manchon de couplage ; et lorsque le tuyau est retiré du couplage, les éléments de membre de retenue, par glissage mutuel des surfaces tronconiques, soient serrés entre eux et contre le tuyau,
**caractérisé en ce que**
chaque secteur circonférentiel comprend un élément similaire à un ressort (25) derrière un membre de retenue semi-annulaire, arrangé pour permettre quelques tolérances sur les membres de retenue afin que les petits désalignements axiaux puissent être absorbés.

2. Couplage de retenue de tuyau selon la revendication précédente dans lequel l'élément de membre de retenue (13, 14, 40, 42) comprend un ou plusieurs renfoncements orientés vers le tuyau, chaque renfoncement comprenant un élément de prise (27) pour s'agripper au tuyau, dans lequel l'élément ou les éléments de prise (27) comprennent la surface de prise de l'élément de membre de retenue.

3. Couplage de retenue de tuyau selon l'une quelconque des revendications précédentes, dans lequel le manchon de couplage (23) comprend une glissière arrangée pour guider le mouvement circonférentiel du secteur de couplage (13, 14, 40, 42) par rapport au manchon de couplage.

4. Couplage de retenue de tuyau selon l'une quelconque des revendications précédentes, dans lequel les secteurs de couplage (13, 14, 40, 42) sont arrangés pour recevoir des écrous et vis destinés à être attachés de manière circonférentielle entre les secteurs de couplage consécutifs, dans lequel lesdites vis sont alignées de manière circonférentielle et/ou dans lequel chaque secteur de couplage comprend une surface destinée à comprimer la bague d'étanchéité (24) contre le tuyau, chacune desdites surfaces étant composée de trois surfaces radiales non concentriques.

5. Couplage de retenue de tuyau destiné à être raccordé à un tuyau selon l'une quelconque des revendications précédentes, dans lequel la surface de renfoncement inclinée de chaque secteur de couplage (13, 14, 40, 42) comprend une surface destinée à comprimer le membre ou les membres de retenue contre le tuyau, chacune desdites surfaces étant composée de trois surfaces radiales non concentriques.

6. Couplage de retenue de tuyau selon l'une quelconque des revendications précédentes, dans lequel les secteurs de couplage comprennent des clapets perforés (16) arrangés pour recevoir des écrous et vis, préférablement dans lequel chaque secteur de couplage comprend deux clapets (16), chaque clapet à une extrémité du secteur circonférentiel respectif, chacun des clapets (16) étant coplanaire avec le clapet contigu du secteur circonférentiel voisin, pour recevoir des écrous et vis destinés à être attachés de manière circonférentielle entre des secteurs de couplage consécutifs.

7. Couplage de retenue de tuyau selon l'une quelconque des revendications précédentes, dans lequel la surface de butée annulaire est composée d'un rebord saillant circonférentiel sur le manchon de couplage et une seconde surface de butée annulaire est composée d'une lèvre circonférentielle, sur le secteur de couplage, ayant un renfoncement circonférentiel pour recevoir ledit rebord.

8. Couplage de retenue de tuyau selon l'une quelconque des revendications précédentes, dans lequel le manchon de couplage (23) est en fonte, en particulier en fonte ductile.

9. Couplage de retenue de tuyau selon l'une quelconque des revendications précédentes, dans lequel le secteur de couplage (11, 31) est en fonte, en particulier en fonte ductile.

10. Couplage de retenue de tuyau selon l'une quelconque des revendications précédentes, dans lequel le membre de retenue (13, 14, 40, 42) est composé d'un corps principal en matériau polymère, particulièrement en POM, et un élément de prise (27), placé au sein d'un renfoncement sur le membre de retenue.

11. Couplage de retenue de tuyau selon l'une quelconque des revendications précédentes, dans lequel l'élément de prise (27) est rainuré, segmenté, composé de plusieurs coins ou strié pour augmenter la prise et/ou dans lequel l'élément de prise (27) est en acier inoxydable.

12. Couplage de retenue de tuyau selon l'une quelconque des revendications précédentes, comprenant une languette d'arrêt modulaire et partiellement amovible insérée entre deux secteurs circonférentiels contigus du membre de retenue pour empêcher lesdits deux secteurs circonférentiels contigus de s'entrechoquer durant le transport ou le montage.

13. Couplage de retenue de tuyau selon l'une quelconque des revendications précédentes, comprenant un élément élastomère amovible entre lesdites première et seconde surfaces de butée annulaires pour empêcher lesdites première et seconde surfaces de butée annulaires de s'entrechoquer durant le transport ou le montage.

14. Couplage de retenue de tuyau destiné à être raccordé à un tuyau selon l'une quelconque des revendications précédentes, comprenant un élément élastomère partiellement amovible entre lesdites surfaces de la languette de l'ensemble de retenue pour comprimer le membre d'étanchéité (24) et augmenter l'étanchéité entre les ensembles de retenue ou les secteurs de couplage (13, 14, 40, 42).

15. Couplage de retenue de tuyau destiné à être raccordé à un tuyau selon l'une quelconque des revendications précédentes, dans lequel le membre de retenue et le renfoncement du secteur de couplage destinés à recevoir le membre de retenue ont une forme conique arrangée pour renforcer la prise du membre de prise en réponse à un effort de traction de tuyau axial.
